# EUROPEAN PATENT APPLICATION

(11) **EP 2 333 938 A1**
(43) Date of publication of application: **15.06.2011**
(21) Application number: 09461517.6
(22) Date of filing: 09.12.2009
(51) Int. Cl.: H02K 3/40

(54) **Stator bar**

(71) Applicant: Alstom Technology Ltd, 5400 Baden (CH)
(72) Inventor: Krause, Tomasz, 50-227, Wroclaw (PL); Klee, Peter, 68309, Mannheim (DE); Stallone, Francesco, 5400, Locarno (CH)

(57) **Abstract**

The stator bar (1) comprises a bare bar (2) made of a plurality of interwoven conductive strands having a central straight part (3) and two end bent parts (5). The central part (3) has at least a first inner corona protection layer (7). A main insulation (9) is wrapped around the bare bar (2) and the at least a first inner corona protection layer (7), defining a main insulation straight part (10) and two main insulation bent parts (11). A first outer corona protection layer (13) is wrapped around the main insulation straight part (10), and a second outer corona protection layer (15) is wrapped around each main insulation bent part (11). The first and each second outer corona protection layers (13, 15) overlap defining a transposition line (16) corresponding to the end of the outer corona protection layer between the first and the second outer corona protection layers (13, 15) directly in contact with the main insulation (9). The inner corona protection layer (20) extends beyond the transposition line (16).

## Description

### TECHNICAL FIELD

The present invention relates to a stator bar.

### BACKGROUN\D OF THE INVENTION

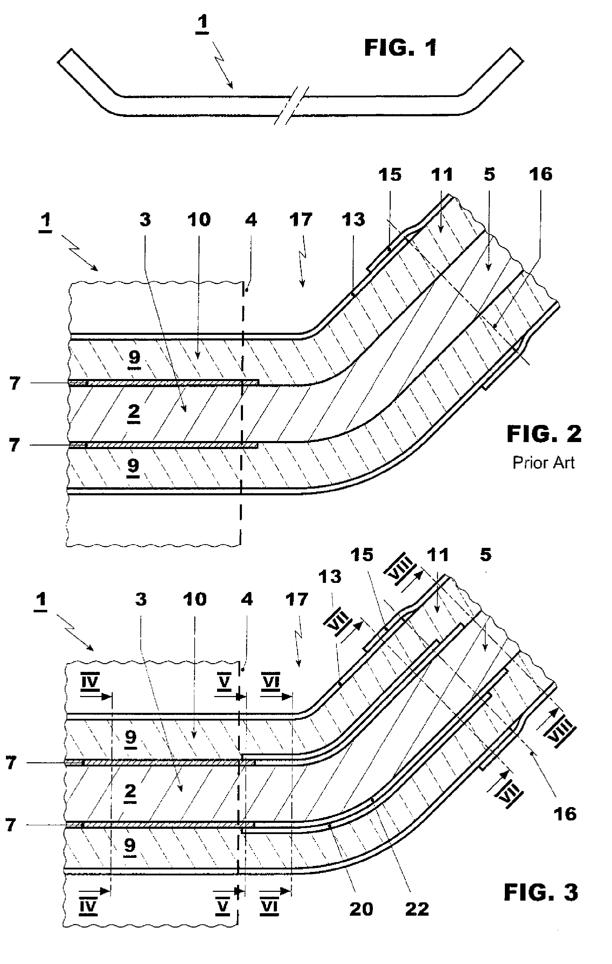

With reference to figures 1 and 2, stator bars 1 comprise a bare bar 2 made of a plurality of interwoven conductive strands; these interwoven bare bars are well known in the art and are neither described, nor shown in details in the following.

The bare bar 2 has a central straight part 3 arranged to be housed within a slot of a stator core 4 and two end bent parts 5 that, when the stator bar in assembled in the stator core slot, come out from the stator core slot to be connected with bent parts of other stator bars to define the stator windings.

The central part 3 of the bare bar 2 has first inner corona protection layers; in particular these layers are made of conductive strips 7 that rest on the short sides of the bare bar 2.

The first inner corona protection layers 7 have a length such that they come out from the stator core slot of a prefixed length, usually being of some tenth of millimetres (for example about 20 millimetres).

Around the bare bar 2 and the first inner corona protection layers 7 a main insulation 9 is wrapped; also the main insulation defines a main insulation straight part 10 and two main insulation bent parts 11.

Then a first conductive outer corona protection layer 13 is wrapped around the main insulation straight part 10, and second semi-conductive outer corona protection layers 15 are wrapped around each main insulation bent part 11.

The first outer corona protection layer 13 overcomes the elbows 17 between the main insulation straight part 10 and each main insulation bent part 11, such that connection between the first and second outer corona protection layers 13 and 15 is made on the main insulation bent parts 11.

In particular, the first corona protection layer 13 rests in contact with the main insulation 9, whereas the ends of the second outer corona protection layers 15 overlap the borders of the first outer corona protection layer 13.

The first and the second outer corona protection layers 13, 15 define transposition lines 16, corresponding to the ends of the first outer corona protection layer 13.

Notwithstanding the good behaviour during operation, because of the long distance between the transposition lines 16 between the first and second outer corona protection layers 13 and 15 and the ends of the first inner corona protection layers 7, in some cases such as for example during high voltage tests, stress problems occur that could cause breakdown of the main insulation.

### SUMMARY OF THE INVENTION

The technical aim of the present invention is therefore to provide a stator by which the said problems of the known art are eliminated.

Within the scope of this technical aim, an aspect of the invention is to provide a stator bar in which stress problems are alleviated, such that also during high stress high voltage tests no breakdown of the main insulation occurs.

The technical aim, together with these and further aspects, are attained according to the invention by providing a stator bar in accordance with the accompanying claims.

### BRIEF DESCRIPTION OF THE DRAWINGS

Further characteristics and advantages of the invention will be more apparent from the description of a preferred but non-exclusive embodiment of the stator bar according to the invention, illustrated by way of nonlimiting example in the accompanying drawings, in which:
Figure 1 is a schematic perspective view of a stator bar;
Figure 2 is a schematic longitudinal section of a portion of a traditional stator bar;
Figure 3 is a schematic longitudinal section of a portion of a stator bar in an embodiment of the invention; and

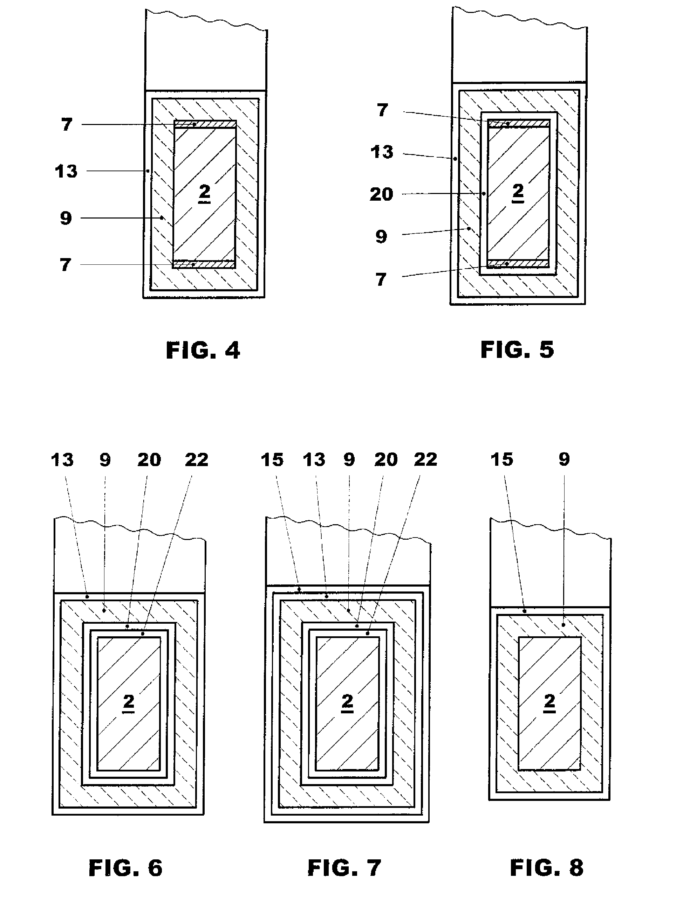

Figures 4, 5, 6, 7, 8 are schematic cross sections respectively through lines IV-IV, V-V, VI-VI, VII-VII and VIII-VIII of figure 3.

In all these schematic figures for sake of clarity the dimensions are exaggerated.

### DETAILED DESCRIPTION OF THE INVENTION

With reference to the figures, these show a stator bar generally indicated by the reference 1.

The stator bar 1 has some features in common with the traditional stator bars and, in this respect, the same reference numbers indicate the same or components similar to those already described.

The stator bar 1 comprises a bare bar 2 made of a plurality of interwoven conductive strands having a central straight part 3 and two end bent parts 5.

The central part 3 has first conductive inner corona protection layers 7, made of conductive strips resting on the short sides of the bare bar 2.

The first inner corona protection layers 7 have a length such that they project beyond each end of the stator core 4 by about 20 millimetres.

Typically, these first inner corona protection layers are electrically connected or glued to the bare bar 2 using a putty.

A main insulation 9 (typically a mica tape) is wrapped around the bare bar 2 and the first inner corona protection layers 7; the main insulation defines a main insulation straight part 10 and two main insulation bent parts 11.

Around the main insulation straight part 10 a first conductive outer corona protection layer 13 is wrapped, and around each main insulation bent part 11 a second semi-conductive outer corona protection layer 15 is wrapped.

As shown in the figures, the first and each second outer corona protection layer 13, 15 overlap each other to get an electric connection.

In particular, the first outer corona protection layer 13 rests on the main insulation 9 along its whole length, whereas each second outer corona protection layer 15 overlaps the first outer corona protection layer 13; at each side the first and second outer corona protection layers 13, 15 define a transposition line 16.

The transposition line 16 corresponds to the end of the outer corona protection layer between the first and the second outer corona protection layers directly in contact with the main insulation, thus in the embodiment shown, the transposition line 16 corresponds to the end of the first outer corona protection layer 13.

Advantageously, the inner corona protection layer extends beyond the transposition line 16.

In this respect, the stator bar 1 comprises a second conductive inner corona protection layer 20 made of a conductive tape that is wrapped around the bare bar 2 and has a side connected to the first inner corona protection layers 7 by overlapping and the other side that overcomes the transposition line 16 by about 30 millimetres.

Preferably an insulating layer 22, made of a mica tape with the mica side facing the bare bar 2, is directly wrapped around the bare bar 2 between the first inner corona protection layers 7 and a position beyond the transposition line 16.

The second inner corona protection layer 20 is then wrapped around this insulating layer 22.

The insulating layer 22 is preferably used because sometimes copper insulation of the interwoven strands forming the bare bar 2 is removed or damaged for example during transportation; the zone where such damages occur is typically the region of the elbows 17. The insulating layer 22 allows avoiding additional short-circuits due to these damages.

In particular, the second inner corona protection layer 20 is wrapped around the first inner corona protection layers 7 overlapping them by about 10 millimetres to get electrical contact.

The insulating layer 22 has one end, opposite that end facing the first inner corona protection layers 7 that overcomes the second inner corona protection layer 20 and, in particular, it overcomes the transposition line 16 by about 50 millimetres.

Preferably the insulating layer 22 is made of the same material as the main insulation 9; in this respect layer 22 is for example made of a single mica tape sheet with 20% overlap.

The operation of the stator bar of the invention is apparent from that described and illustrated and is substantially the same as that of traditional stator bars.

In particular, thanks to the second inner corona protection layer 20, the stator bar according to this embodiment of the invention is able to withstand also high voltage stresses to which it is subjected during operation or high voltage tests, without any problem.

Naturally the features described may be independently provided from one another.

The stator bar conceived in this manner is susceptible to numerous modifications and variants, all falling within the scope of the inventive concept; moreover all details can be replaced by technically equivalent elements.

In practice the materials used and the dimensions can be chosen at will according to requirements and to the state of the art.

### REFERENCE NUMBERS

1 stator bar
2 bare bar
3 central straight part of 2
4 stator core
5 bent parts of 2
7 first conductive inner corona protection layers
9 main insulation
10 straight part of 9
11 bent parts of 9
13 first conductive outer corona protection layer
15 second semi-conductive outer corona protection layer
16 transposition line
17 elbow
20 second conductive inner corona protection layer
22 insulating layer

## Claims

1. Stator bar (1) comprising a bare bar (2) made of a plurality of interwoven conductive strands having a central straight part (3) and two end bent parts (5), wherein:
the central part (3) has at least a inner corona protection layer (7),
a main insulation (9) is wrapped around the bare bar (2) and the at least a first inner corona protection layer (7), defining a main insulation straight part (10) and two main insulation bent parts (11),
a first outer corona protection layer (13) is wrapped around the main insulation straight part (10), and
a second outer corona protection layer (15) is wrapped around each main insulation bent part (11),
the first and each second outer corona protection layers (13, 15) overlap defining a transposition line (16) corresponding to the end of the outer corona protection layer between the first and the second outer corona protection layers (13, 15) directly in contact with the main insulation (9),
**characterised in that** the inner corona protection layer (20) extends beyond the transposition line (16).

2. Stator bar as claimed in claim 1, **characterised in that** the at least an inner corona protection layer comprise at least a first inner corona protection layer protecting the central part (3) of the bare bar (2) and at least a second inner corona protection layer (20) having a side connected to the at least a first inner corona protection layer (7) and the other side overcoming the transposition line (16).

3. Stator bar as claimed in claim 2, **characterised in that** the second inner corona protection layer is defined by a conductive tape that is wrapped around the bare bar (2).

4. Stator bar as claimed in claim 3, **characterised by** comprising an insulating layer (22) wrapped around the bare bar (2) between the at least a first inner corona protection layer (7) and a position beyond the transposition line (16), the second inner corona protection layer (20) being wrapped around this insulating layer (22).

5. Stator bar as claimed in claim 3, **characterised in that** the second inner corona protection layer (20) is connected to the at least a first inner corona protection layer (7) by overlapping.

6. Stator bar as claimed in claim 5, **characterised in that** in order to connect the first and second inner corona protection layers (7, 20), the second inner corona protection layer (20) is wrapped around the at least a first inner corona protection layer (7).

7. Stator bar as claimed in claim 4, **characterised in that** the insulating layer (22) has one end, opposite that end facing the at least a first inner corona protection layer (7), that overcomes the second inner corona protection layer (20).

8. Stator bar as claimed in claim 4, **characterised in that** the insulating layer (22) is made of the same material as the main insulation (9).

9. Stator bar as claimed in claim 1, **characterised by** comprising two first inner corona protection layers (7) defined by strips each resting on a short side of the bare bar.

10. Stator bar as claimed in claim 9, **characterised in that** the first inner corona protection layers (7, 20) are made of conductive material.

11. Stator bar as claimed in claim 1, **characterised in that** the first outer corona protection layer (13) is made of a conductive material and the second outer corona protection layer (15) is made of a semi-conductive material.
